# EUROPEAN PATENT APPLICATION

(11) **EP 2 423 386 A1**
(43) Date of publication of application: **29.02.2012**
(21) Application number: 10009038.0
(22) Date of filing: 31.08.2010
(51) Int. Cl.: E02B 3/04

(54) **Method of erosion control at shores and shore line obtained by said method**

(71) Applicant: De Oude, Ernst, 6365 Kirchberg i.T. (AT)
(72) Inventor: De Oude, Ernst, 6365 Kirchberg i.T. (AT)

(57) **Abstract**

The invention relates to method of strengthening ground surface or ground structure, such as a riff, water bottom, field, dune, dike, or road, comprising the steps of contacting the ground surface (27) with at least one petrifiable element (3) comprising a core body provided with outwardly projecting labyrinth elements (15) for collecting ground surface material in between the labyrinth elements. The material collected in between the labyrinth elements is allowed to petrify and bind to the ground surface.

## Description

The present invention relates to a method for strengthening a ground surface or ground structure, to a riff forming installation, to a petrifiable element, and to the obtainable strengthened ground surface or ground structure.

The strengthening of the effect on which the invention is based was discovered by happenstance when repairing the house using spinning metal brushes. The spent spinning brushes were left at a stake unattended in the backyard garden partially covered by soil and other debris. After some time it appeared that the metal hairs were corroded and in between the corroded metal hairs of the brushes had formed a stone-like or petrified solid material that extended outwardly and formed a solid clump firmly attached into the surrounding ground of the garden. Effectively, the spinning brushes had strengthened the ground surface of the garden. It appeared that this surprisingly found effect could be used more generally for strengthening ground surfaces and structures, as it turned out

Ground surfaces, such as water bottoms, lake bottoms, and river bottoms, but also fields and roads, may need to be strengthened in order to better withstand local conditions such as water and tide currents, heavy traffic, and weather conditions. Similarly, ground structures, such as dikes (in particular peat dikes), dunes and riffs, may need to be strengthened for the same reasons.

A coastal shore is often suffering from loss of coastal structure, such as dunes and dikes, due to tough seas with high waves and/or strong currents. Such tough seas are relative frequent in the autumn season on the northern or southern hemisphere. In order to avoid loss of coastal structure various attempts have been carried out in the past with variable success.

According to one attempt sand is supplemented to the sandy beach in order to compensate for losses. Such sand supplements should be repeated each time when major coastal losses have occurred. This is expensive and requires the local availability of sand, such as form deeper regions. A second attempt is to prevent the coastal structure form losses by forming coastal dikes with stone material, such as basalt rocks and/or concrete blocks. This is a substantially permanent coastal protection but requires an immense interference with the natural coast line, and is for that reason seldomly allowed. Still another attempt is to form a riff in the water with stone material so that the force of the shore running waves and strong currents is decreased to a level that coastal damage is minimal. However, such riff made of stone material is generally not able to withstand waves and current for a long time. So that eventually the riff structure is falling apart or lost in the sandy bottom.

Dikes predominantly made of peat may suffer from dewatering whereby a peat dike becomes reduced in withstanding water pressure. Accordingly, a dewatered and dried out peat may not be able to withstand water pressure as a result of sudden massive rains. The sudden water presence does not allow a gradual watering of the peat dikes with the result of a peat dike collapse.

Also ground surfaces like (parking) fields and roads may need to be strengthened in order to withstand water pressure or washing out of road material, but also to increase the road tolerated pressure of vehicles, such as vans, carsand aeroplanes.

The present invention has for its object provided a method that uses particular petrifiable elements, which method substantially overcomes the above mentioned drawbacks and complies with desires of strength improvement.

According to a first aspect of the invention this is obtained with a method of strengthening ground surface or ground structure, such as a riff, water bottom, field, dune, dike, or road, comprising the steps of:
i. contacting the ground surface with at least one petrifiable element comprising a core body provided with labyrinth means comprising outwardly projecting labyrinth elements;
ii. collecting ground surface material in between the labyrinth elements; and
iii. allowing the material collected in between the labyrinth elements to petrify and bind to the ground surface.

The petrifiable element of the invention comprises labyrinth means. The labyrinth within the labyrinth means is filled with ground surface material. This may be the same material as of the ground surface or structure. However, other ground material such as peat, clay, but also debris, such as grass, hay, wood parts, saw dust and the like, and/or water debris, such as sea plants, sea animal remnants, wood parts, shells, plastic and sand, may be added. The petrifiable element will form an intimate contact and strong bond with the ground surface or ground structure because the material collected and residing in between the labyrinth means will petrify to a solid clump with the surrounding ground.

In order to have the petrified element incorporated into the ground structure or ground surface it is preferred that the ground surface or structure is provided with a groove and the petrifiable element is contacted with the ground surface in the groove.

According to a preferred embodiment of the invention is the method of the invention used for forming a riff in or on a ground surface being a water bottom, such as a sea bottom, river bottom or lake bottom, wherein the petrifiable element is connected via connection means to spaced apart anchor means anchored to the water bottom and the petrifiable element is movable relative to the connection means while in contact with the water bottom thereby collecting material in between the labyrinth means and penetrating in to the sandy water bottom.

The petrifiable element is kept at a particular site but is allowed to move, such as bouncing and rolling in a substantially upward and downward direction, thereby touching the water bottom, such as by water current, tide and mechanical movement. The labyrinth between the labyrinth means is filled with water debris, such as sea plants sea animal remnants, wood parts, shells, plastic and sand, while the petrifiable element is forming a groove in the water bottom. Eventually, the petrifiable element will be accommodated partly in this groove. The petrifiable element will form an intimate contact and strong bond with and within the bottom because the material residing in between the labyrinth means will petrify. During this riff forming process the forming riff is relatively water permeable and does not form a major obstacle to water current Accordingly, the force of the water pressure exerted on the forming riff is relatively modest and will not destroy or hamper the riff forming installation and keep the petrifiable element at its site.

The connection means are formed by any suitable mechanical structure that on the one hand allows for movement of the petrifiable element and on the other to a reliable connection to the anchor means, preferably under the foreseeable worse or worst storm conditions. Examples are metal or plastic cables, strips, chains or lamellae. But cables are preferred.

The anchor means are generally metal, wooden, concrete posts or blocks that can be anchored to the sandy bottom by bottom penetration or by weight, and kept in place under the foreseeable worse or worst storm conditions. Posts of any endurable material are preferred.

For collecting and settling of the debris in the labyrinth formed by the labyrinth elements of the labyrinth means, it is beneficial that the form of the labyrinth elements supports and catalysis the filling and petrifying of the material settled in the labyrinth. According to a preferred embodiment of the invention the labyrinth elements are at least over part of the length straight, bended, helical and/or serpentinal. Straight forms are preferred for the perforation of material due to the bouncing, springing and rolling of the petrifiable elements over the sandy bottom. Perforation results in an arresting material in or near the labyrinth. Bended, helical and serpentinal forms are beneficial for capturing material in the labyrinth. Obviously, combinations of various forms of petrifiable elements may be used as well as various forms over the length of a petrifiable element.

Preferably, a core body selected from the group comprising a rounded body, a spherical body, a cylindrical body. Such forms are optimal for strengthening a ground surface or structure. In addition, for a proper functioning of the petrifiable element in forming a riff, it is also preferred that the petrifiable element may be subjected to a riff forming movement, such as bounce, jump, roll and spring at a location on the bottom while being movable connected to the anchor means. Such movement is promoted with a core body selected from the group comprising a rounded body, a spherical body, a cylindrical body. Due to the rounded form these movements are promoted and fluent, and even inherently generated by water current and wave action. Dependent on the form, shape, and size of the ground surface or structure, such as a riff, to be strengthened or to be formed the rounded body may have a first dimension in the range of 0.1 to 1m, more preferably 0.2 to 0.5m. The larger dimensions are used for strengthening larger areas or forming larger and in particular higher riffs under the water level. But the larger the first dimension the larger the force of wave action and water current on the petrifiable element, the connection means and the anchor means. Thus, the skilled person is in a position to select the optimal first dimension of the petrifiable element on the basis of the locally residing condition, in particular the water and/or storm conditions.

It will be appreciated that a rounded (non-spherical) body has a second longitudinal or elongated dimension. Dependent on the chosen first dimension, the rounded or cylindrical core body has a second elongated dimension in the range of 0.3 to 2m, preferably 0.5 to 1m. The skilled person is in a position to select the optimal second dimension of the petrifiable element on the basis of the chosen first dimension and on the locally residing conditions, such as water and/or storm conditions.

The elongated labyrinth elements may bounce, jump and roll over the bottom in order to collect debris and sand, while forming a groove for accommodating the element with the petrifying material in the labyrinth. But also in ground structure the petrifiable element may be compressed or bended due to local application conditions. This implies that the labyrinth elements desirably are to certain extent flexible and resilient Thereto, it is preferred when the labyrinth elements have a length of 0.1 to 2m, preferably 0.2 to 1.5m, more preferably 0.3 to 1m, and/or a diameter in the range of 0.1 to 1cm, preferably 0.2 to 0.5cm. Obviously, the selection of the length has impact on the selectable diameter. But the skilled person is in a position to select the optimal length and diameter of the labyrinth element on the basis of the locally residing conditions, and material the labyrinth elements are made of.

For a catalysis of the petrifying process of the material captured in the labyrinth is preferred, that the labyrinth elements are made of corrosive material such as iron, iron alloy and the like. Corrosion results in an accelerated solidification and subsequently petrifying of the material. As a corrosive material is preferred iron, iron alloy and the like. Basically because any release of corroding iron in the water is not hampering the water environment which already comprises iron.

In relation to the accelerated processes of formation, solidification and petrifying of the material captured in the labyrinth, it is preferred that these processes occur under aerobic conditions. Thereto it is advantageous that air supply means are connected to the core body for releasing air near and/or between the labyrinth means. Obviously, the supplied air is beneficial for the corrosion of the preferably corrosive petrifiable elements. For other applications in the ground or ground structure the covering may be sufficient air permeable, so that periodic air supply or even no air supply is needed.

In order to form a strengthened ground surface or structure, such as a riff, with some length it is preferred to use two or more petrifiable elements separately, but in water it is preferred to arrange more than one petrifiable element between two anchor means. Accordingly, it is preferred for forming a riff of some length that the riff forming installation comprising two or more petrifiable elements preferably spaced apart over a distance in between the anchor means. Another embodiment comprises one or more petrifiable elements between two or more anchor means. The number of petrifiable elements present between two anchor means is dependent on the length of the riff, the size of the petrifiable elements and the storm conditions dictating the forces that the connection means have to endure. Obviously, the larger the distance between two neighbouring petrifiable elements the less force on the connection means. Generally the distance is more than 0.2m or more then 0.5m, such as more than 1m, but may be in the range of 0.2 to 1m or 0.5 to 1m.

The Petrifiable element or elements for strengthening ground surface and/or ground structure may be used individually or in groups of two or more. The petrifiable elements may be used in random mutual orientation or in ordered orientations, such as coaxially and/or in parallel thereby forming elongated and/or wide surfaces, respectively. All dependent on the local circumstances so desire. The skilled person will be able to make a selection of the optimal or best configuration required for the ground surface or structure to be strengthened.

In a preferred embodiment of the invention a riff forming installation comprising at least one petrifiable element movably connected by connection means to anchor means, wherein the petrifiable element comprises a core body provided with outwardly projecting labyrinth elements. This riff forming installation comprises a petrifiable element which is connected to anchor means anchored to the sandy water bottom.

This riff forming installation comprises a petrifiable element which is connected to anchor means anchored to the water bottom, which may be sandy, clay, and/or partly covered with pebbles, small stones and rocks, and mixtures thereof.

The connection means are formed by any suitable mechanical structure that on the one hand allows for movement of the petrifiable element and on the other to a reliable connection to the anchor means, preferably under the foreseeable worse or worst storm conditions. Examples are metal or plastic cables, strips, chains or lamellae. But cables are preferred.

The anchor means are generally metal, wooden, concrete posts or blocks that can be anchored to the sandy bottom by bottom penetration or by weight, and kept in place under the foreseeable worse or worst storm conditions. Posts of any endurable material are preferred.

For the settling of the water debris in the labyrinth formed by the labyrinth elements it is beneficial that the form of the labyrinth elements supports and catalysis the filling and petrifying of the material settled in the labyrinth. Thereto, the labyrinth elements are at least over part of the length straight, bended, helical and/or serpentinal. Straight forms are preferred for the perforation of material due to the bouncing, springing and rolling of the petrifiable elements over the sandy bottom. Perforation results in an arresting material in or near the labyrinth. Bended, helical and serpentinal forms are beneficial for capturing material in the labyrinth. Obviously, combinations of various forms of petrifiable elements may be used as well as various forms over the length of a petrifiable element.

For a proper functioning of the petrifiable element it is preferred that the petrifiable element may be subjected to a riff forming movement, such as bounce, jump, roll and spring at a location on the sandy bottom while being movable connected to the anchor means. Such movement is allowed and even promoted with a core body selected from the group comprising a rounded body, a spherical body, a cylindrical body. Due to the rounded form these movements are promoted and fluent, and even inherently generated by water current and wave action. Dependent on the form, shape, and size of the riff to be formed the rounded body may have a first dimension in the range of 0.1 to 1m, more preferably 0.2 to 0.5m. The larger dimensions are used for forming larger and in particular higher riffs under the water level. But the larger the first dimension the larger the force of wave action and water current on the petrifiable element, the connection means and the anchor means. Thus, the skilled person is in a position to select the optimal first dimension of the petrifiable element on the basis of the locally residing water and storm conditions.

In order to form a riff with some length it is preferred to arrange more than one petrifiable element between two anchor means. Accordingly, it is preferred for forming a riff of some length that the riff forming installation comprising two or more petrifiable elements preferably spaced apart over a distance in between the anchor means. Another embodiment comprises one or more petrifiable elements between two or more anchor means. The number of petrifiable elements present between two anchor means is dependent on the length of the riff, the size of the petrifiable elements and the storm conditions dictating the forces that the connection means have to endure. Obviously, the larger the distance between two neighbouring petrifiable elements the less force on the connection means. Generally the distance is more than 0.2m or more then 0.5m, such as more than 1m, but may be in the range of 0.2 to 1m or 0.5 to 1m.

For an optimal formation of a riff, the distance between the water surface and the petrifiable element is 0.3 to 2m, preferably 0.5 to 1m, and/or wherein the petrifiable element penetrates into the sandy water bottom for 0.2 to 1m, preferably 0.3 to 0.5m.

Another aspect of the invention relates to riff forming element as defined and described above with specific reference to the claims for the riff installation. Such petrifiable element of the invention comprises at least a core body provided with outwardly projecting labyrinth elements and is designed and arranged such as to function in a riff forming installation of the invention.

A further aspect of the invention relates to a method for forming a riff on a sandy water bottom, comprising the steps of:
i) anchoring spaced apart anchor means to the sandy water bottom;
ii) connect via connection means at least one petrifiable element, as defined and described above, in between anchor means, such that the petrifiable element is movable relative to the connection means while in contact with the sandy water bottom thereby collecting material in between the labyrinth means and penetrating in to the sandy water bottom.

According to this method of the invention are first anchor means anchored at the site where the riff on the invention is to be formed. Connection means are connected to the anchor means. The connection means are provided or will be provided with one or more petrifiable elements of the invention. The mounting of the petrifiable elements to the connection means is such that the petrifiable element is movable relative to the connection means while in contact with the water bottom thereby collecting material in between the labyrinth means and penetrating in to the sandy water bottom. As described above the collected mixture of water debris and sand will solidify and petrify forming a solid material bound to sand while accommodated in a self formed groove partially covering the petrifiable element It will be appreciated that the whole process of forming the riff takes place under water or at least during high tide. Eventually the riff of the invention will remain below water surface, preferably permanently allowing swimming people and boats to pass over unhindered. If desired marking means may be added, so that the location of the formed riff and/or petrifiable element(s) is marked contributing to the safety of divers.

Preferably the distance between the water surface and the petrifiable element is 0.3 to 2m, more preferably 0.5 to 1m. Obviously, the skilled person may select the optimal distance on the basis of the local situation and weather conditions.

As stated and described above the petrifiable element will gradually during the riff forming process, form a groove and will be accommodated and partially covered in the forming groove by the formed riff. Generally, it is preferred for a formed, stable riff that the petrifiable element penetrates or extends into the sandy water bottom for 0.2 to 1m, more preferably for 0.3 to 0.5m. Obviously, the skilled person may select the optimal penetration on the basis of the local situation and weather conditions.

Finally, relates the invention also to a strengthened ground surface or ground structure, such as a riff, water bottom, field, dune, dike, or road, obtainable by the method described above.

As indicated above, the surface or structure to be strengthened by have any shape of form, such as elongated (riff, dune, dike and road shoulder), or wide (parking field, road, landing strip). Thus, the dimensions of the ground surface or structure may vary extensively, such as from 1m to 20km long and 0.2m to 1km wide. For a riff a distance from the shore varies for about 10m to 15km, such as 100m to 5km, like 150m to 1km. The actual distance will be dependent on the local situation like the nature of the sandy water bottom, the water current and the wave force under stormy conditions. Obviously, the skilled person is able to make a selection resulting in the formation of the riff according to the invention.

Mentioned and other features of the method of strengthening ground surface or ground structure, of the riff forming installation, of the petrifiable element, and of the strengthened ground surface and structure, and riff formed according to the invention will be further illustrated by several embodiments which are given for information purposes only and are not intended to limit the invention to any extent In relation to these embodiments reference will be made to the annexed figures of which:
Figure 1 is a schematic view of a riff forming installation of the invention;
Figure 2 at a larger scale detail II in figure 1 of a petrifiable element of the invention;
Figure 3 a cross section of the riff forming element shown in figure 2;
Figure 4 schematically the principle of the riff forming according to the invention;
Figure 5 schematically various embodiments of the labyrinth means projecting from a core body of a petrifiable element of the invention;
Figure 6 another embodiment of a petrifiable element of the invention;
Figure 7 shows schematically in cross section in two stages the strengthening of a ground structure; and
Figure 8 shows schematically in cross section in two staged the formation of a strengthened ground surface.

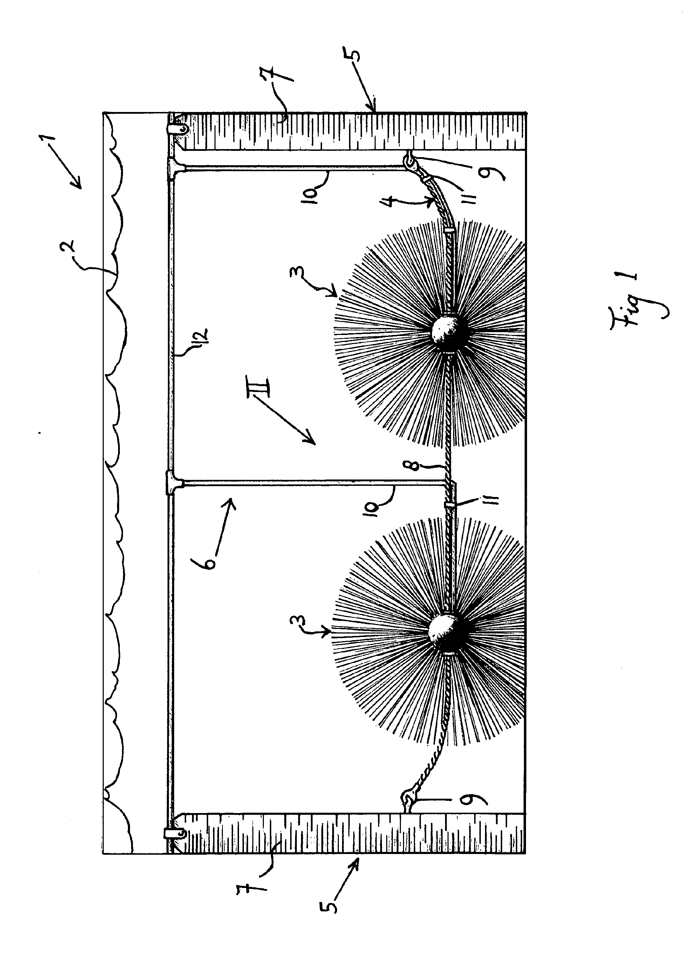

Figure 1 shows a riff forming installation 1 for forming a strengthened ground structure according to the invention arranged under water level 2. The riff installation 1 comprises two petrifiable elements 3 arranged between and connected to two anchor means 5 by connection means 4. The riff forming installation 1 further comprises air supply means 6 supplying air to both petrifiable elements 3.

The anchor means 5 comprise a concrete post 7 firmly anchored into the sandy water bottom (not shown). Anchored to the posts 7 is a steel cable 8 comprised by the connection means 4. The cable 8 is connected to the posts 7 via connector 9 allowing some movement by the cable 8. The cable 8 loosely extends between the posts 9 and passes through the petrifiable elements 3. Thus, the petrifiable elements 3 may move over the sandy water bottom by rolling, bouncing and rotation. The cable 8 further carries flexible tubes 10 of the air apply means 6, which are fastened to the cable 8 by clamps 11. The tubes 10 supply air from a main air line 12 to the petrifiable elements 3. The petrifiable elements have a diameter of about 1.5m and are about 1m below the water level 2. The distance between the posts 7 is about 4.5m, and the distance between the petrifiable elements 3 and between a petrifiable element 3 and a post 7 is about 0.5m. These dimensions are suitable for a given situation, but may vary if local coast, water and weather, and storm conditions so require.

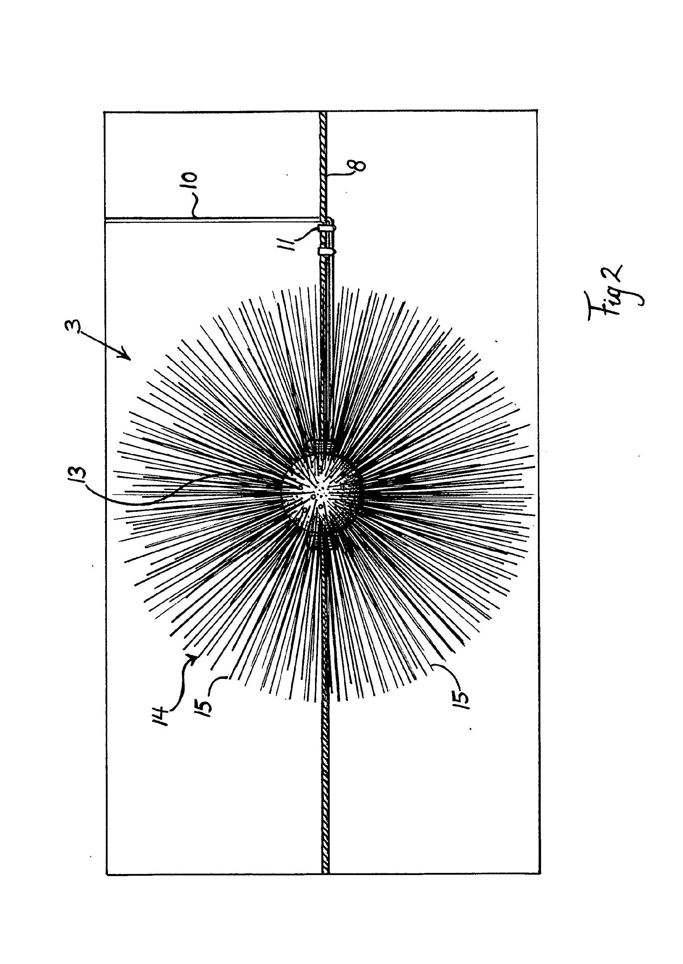

Figure 2 shows more in detail the petrifiable element 3 carried and connected to the cable 8. The petrifiable element 3 comprises an iron steel, rounded and spherical core body 13 through which the cable 8 passes. The core body 13 is provided over its outer surface with labyrinth means 14 comprising outwardly projecting labyrinth elements 15. The labyrinth elements 15 are evenly distributed over the outer surface and form the labyrinth. The labyrinth elements 15 are of substantially the same length so that the petrifiable element 3 is substantially spherical. Obviously, the petrifiable element 15 may be of mutually different length so that the petrifiable elements 15 may have any desired outer shape as would be beneficial for its riff forming properties dictated by the local conditions. The petrifiable element 3 is about 1.5m in diameter. The core body has a diameter of about 0.3m and the labyrinth elements 14 have a length of about 0.6m.

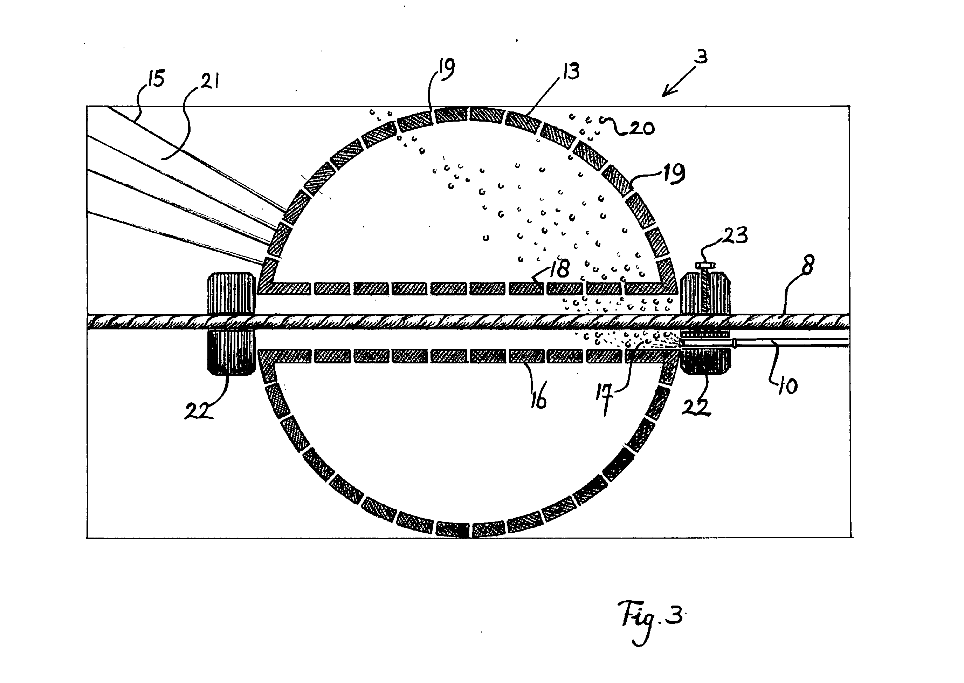

Figure 3 shows more in detail the construction of the petrifiable element 3 carried by the cable 8. The steel core body 13 is hollow and provided with a diametrical bore 16. Through this bore 16 the cable 8 extends and the air tube 10 releases air 17 in the bore 16. The bore is perforated and comprises perforations 18 via which air 17 arrives in the hollow core body 13. The core body is provided over it outer surface with openings 19 via which air 20 is released into the labyrinth 21formed in between the labyrinth elements 15. The air will accelerate the corrosion of the steel core body 13 and of labyrinth elements 15. The air will also promote the solidification and petrifying of the material collected and captured between and by the petrifiable elements 3. Accordingly, the supplied air will improve the forming of a reliable and firm connection with the sandy bottom and thus the riff formation.

The core body 13 is kept at a particular region on the cable 8 by blocks 22 secured to the cable 8 by a screw 23. The distance between the blocks 22 is such that sufficient clearance is available for the petrifiable element 3 to rotate around the cable 8 under the force of the water current and waves.

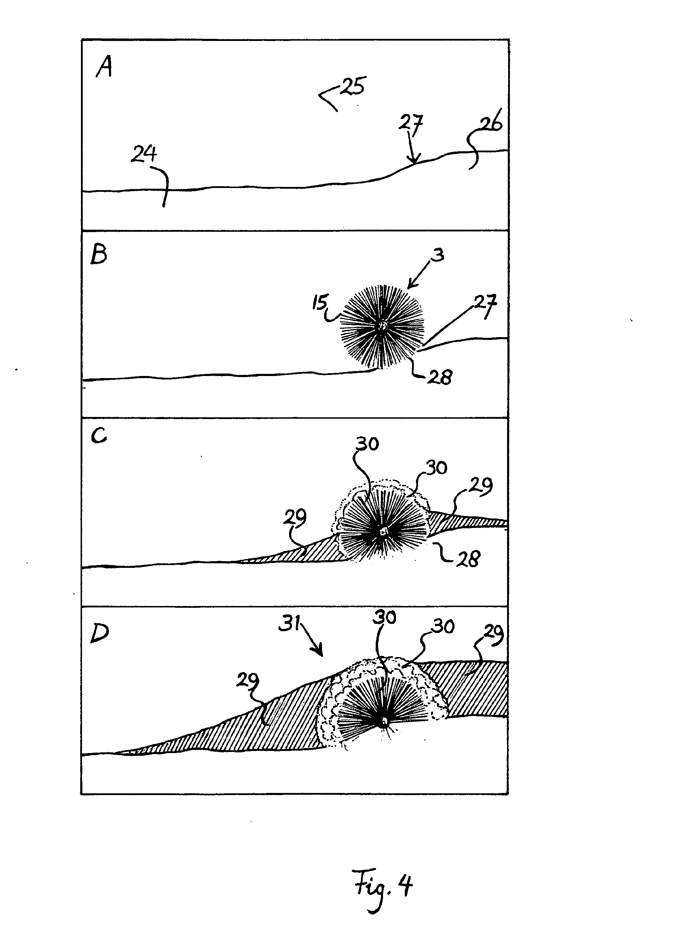

Figure 4 illustrates the theory of the process of riff formation according to the invention. This theory is only given for illustrative purposes and not intended to limit the invention thereto. Nevertheless, the riff 31 as illustrated in figure 4D is formed. The sandy water bottom 24, in this example a sea bottom 24 in the sea 25. The sea 25 exhibits a tide driven water current, and comprises a sand bank 26 (see figure 4A), which will move and may be destroyed by the water current and wave force during stormy conditions. The riff forming installation 1 of the invention is placed along the sea facing side 27 of the sand bank 26, see figure 4B. Shown for clarity purposes is only in cross section a petrifiable element 3, such as described in the relation to the figures 1- 3. Due to the water current, tide changes, wave forces and stormy conditions the petrifiable element 3 will bounce and jump on the sandy bottom 24 at the sea side 27 and gradually collect material in the labyrinth formed between the labyrinth elements 15. At the same time a groove 28 is forming beneath the petrifiable element 3, see figure 4C. The result is that the material collected between the labyrinth elements 15 will solidify and petrify and grows and forms towards the outside of the petrifiable element 15 a solid layer 30 which forms a strong and firm bond in the groove 28 with the sandy bottom 24. At the same time sand 29 will accumulate around the petrifiable element 3. The result is the formation of a riff 31 which is substantially held in place by the load of the heavy petrifiable element 3 secured into the sandy bottom 24, see figure 4D.

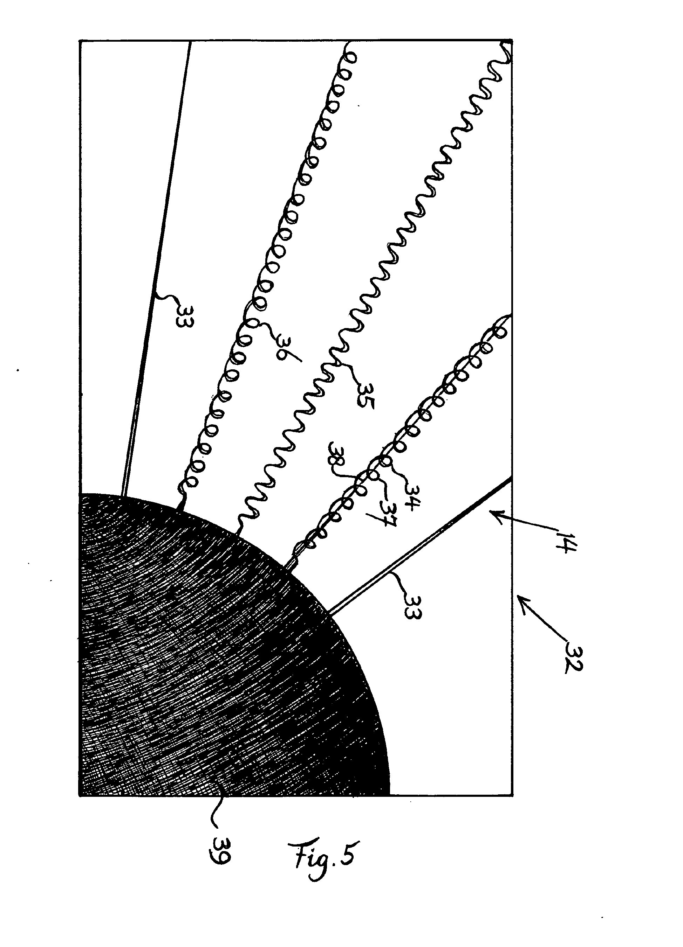

Figure 5 shows several embodiments of the labyrinth elements 33 - 36 of the labyrinth means 14 according to the invention having a length varying between 0.1 to about 2m.

The labyrinth element 33 has the form of a pin 33 with a diameter (of about 1cm) that decreases towards the distal end of the pin 33 to about 0.1cm. The pin 33 will be relatively flexible towards the distal end and prone to perforate and capture water debris.

The labyrinth element 34 comprises a core rod 37 (diameter about 0.5cm) carrying a helically wound iron line 38 (diameter about 0.3cm). This labyrinth element 34 will be flexible and still allow for capturing and optimally securing water debris in the labyrinth particularly within the helical line 38.

The labyrinth element 35 has a serpentine form and will be very flexible and resilient (diameter about 0.2cm) so that the labyrinth element 35 is able to maximal bouncing and jumping on the sandy water bottom.

The labyrinth element 36 (diameter about 0.4cm) has a helical form which is optimal for bouncing and jumping on the water bottom and for collection and capturing material in the labyrinth.

The labyrinth elements 33 - 36 are shown to be mounted on a core body made of plastic and having a closed outer surface. Obviously, the labyrinth elements may also be mounted on a perforated core body 13. The skilled person will appreciate which type or types of labyrinth elements 14, 33 - 36 are required for the locally presiding weather and water conditions for forming the riff according to the invention in the desired form and shape.

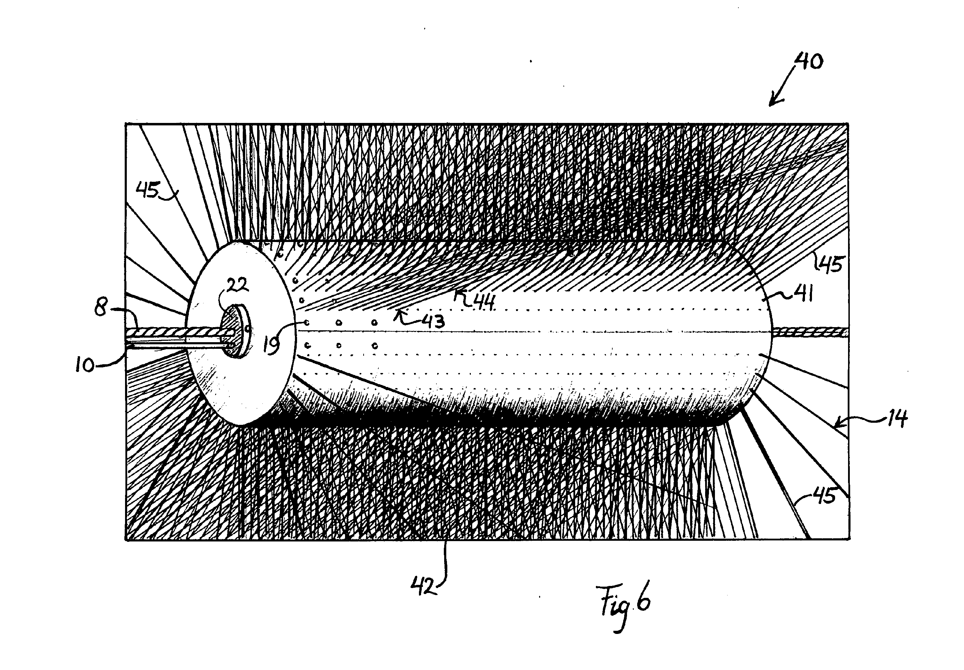

Figure 6 shows another embodiment of a petrifiable element 40 of the invention carried by the cable 8 and connected to an air tube 10. The petrifiable element 40 comprises a cylindrical core body 41 with a length of 1.5m and a diameter of 1m. The core body 41 is provided over its outer surface with rows 43, 44 of labyrinth means 14 and in between the rows 43,44 with perforations 19 for releasing air in the labyrinth 42 formed by the labyrinth means 14. In this embodiment is the core body made of plastic and are the labyrinth means made of a corrosive iron based alloy. The corrosive labyrinth elements are straight and arranged in rows 43,44. The labyrinth elements 45 project from the core body surface under an angle that changes with the rows 43,44 over the circumference of the cylindrical core body 41. The labyrinth elements 45 will entangle and form a relative dense labyrinth optimal for capturing and securing water debris and ultimately for forming the petrified material firmly connected to the sandy water bottom.

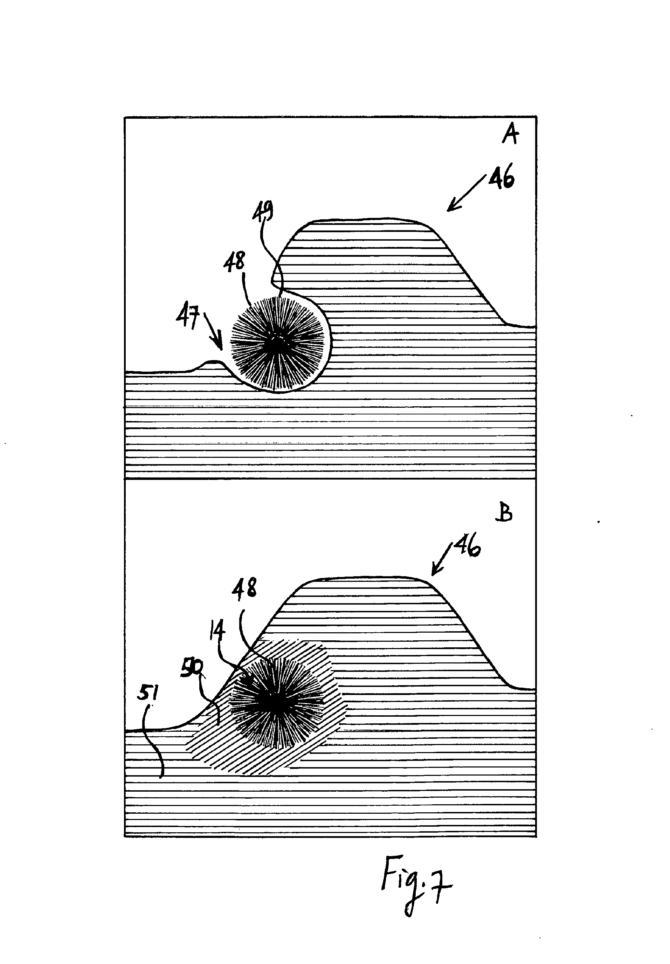

Figure 7A shows a ground structure 46, such as a dike 46, to be strengthened. Thereto, the dike 46 is provided with a groove 47 and a petrifiable element 48 of the invention is accommodated in the groove 47. The petrifiable element 48 is elongated and has a substantially cylindrical shape as the petrifiable element 40 as described in relation to figure 6. Dependent on the length of dike 46 to be strengthened one or more petrifiable elements 48 may be used and preferably arranged in a substantially coaxial direction. The space 49 surrounding the petrifiable element 48 is filled with soil and other debris. With laps of time is formed a petrified mass 50 extending outside of and in between the labyrinth means 14 of the petrifiable element 47, see figure 7B. This petrified mass 50 is firmly bound to the labyrinth means 14 and to the surrounding soil 51. This results in a strengthening of the dike 46.

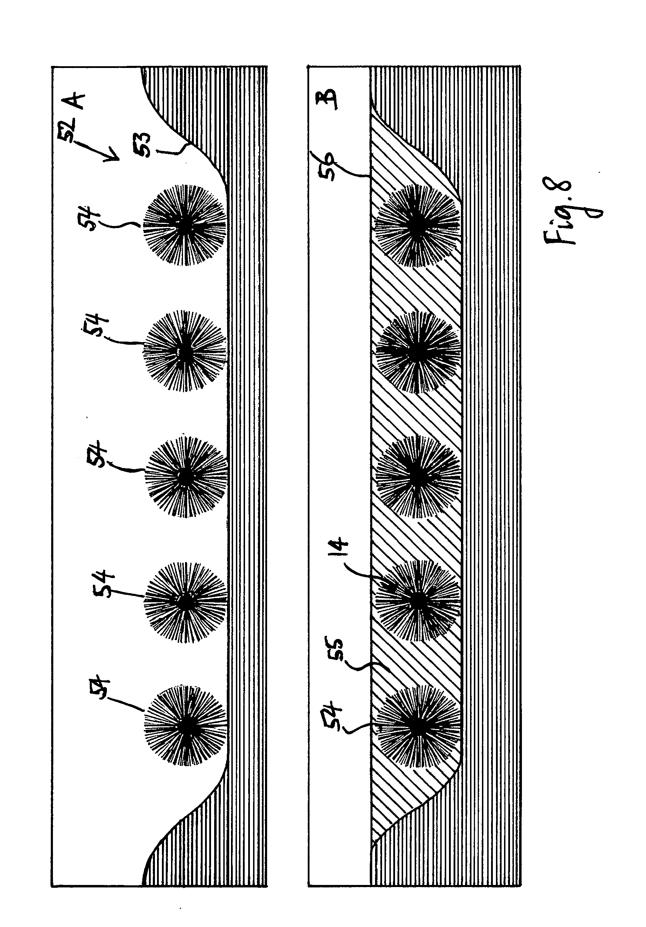

Finally, figure 8A shows a ground surface 52, such as a parking field or road. In the ground surface 52 is formed a groove 53 of a width and length as required to be strengthened. In the groove are arranged petrifiable element 54 as described in relation to figure 6. The petrifiable elements 54 have dimensions and mutual distances such that after application of soil and other debris with laps of time a solidified mass 55 has been formed having a size as required to be strengthened and acquiring the desired increased strength, see figure 8A. If required air may be supplied temporarily for accelerating the petrification process of the material within the labyrinth means 14 and surrounding the petrifiable elements 54.

It will be apparent to the skilled reader that many variations of the method of strengthening ground surface and structure, of riff forming installation, of the petrifiable elements and labyrinth elements are possible without leaving the inventive ambit of the present invention. For instance, the riff forming device and installation may be used in open sea with or without tide streams on a sandy, partially sandy or artificially sandy sea bottom. Application of the riff forming installation is also contemplated for use in lakes.

## Claims

1. Method of strengthening ground surface or ground structure, such as a riff, water bottom, field, dune, dike, or road, comprising the steps of:
i. contacting the ground surface with at least one petrifiable element comprising a core body provided with labyrinth means having outwardly projecting labyrinth elements;
ii. collecting ground surface material in between the labyrinth elements; and
iii. allowing the material collected in between the labyrinth elements to petrify and bind to the ground surface.

2. Method as claimed in claim 1, wherein the ground surface or ground structure is provided with a groove and the petrifiable element is contacted with the ground surface in the groove.

3. Method as claimed in claim 1 or 2 for forming a riff, wherein the ground surface is a water bottom, such as a sea bottom, river bottom or lake bottom, wherein the petrifiable element is connected via connection means to spaced apart anchor means anchored to the water bottom and the petrifiable element is movable relative to the connection means while in contact with the water bottom thereby collecting material in between the labyrinth means and penetrating in to the sandy water bottom.

4. Method as claimed in claim 3, wherein the distance between the water surface and the petrifiable element is 0.3 to 2m, preferably 0.5 to 1m, and/or wherein the petrifiable element penetrates into the sandy water bottom for 0.2 to 1m, preferably 0.3 to 0.5m.

5. Method as claimed in claim 1- 4, wherein the labyrinth elements are at least over part of the length straight, bended, helical and/or serpentinal.

6. Method as claimed in claim 1- 5, wherein, the core body is selected from the group comprising a rounded body, a spherical body, a cylindrical body, preferably having a first dimension in the range of 0.1 to 1m, more preferably 0.2 to 0.5m.

7. Method as claimed in claim 1- 6, wherein the rounded or cylindrical core body has a second elongated dimension in the range of 0.3 to 2m, preferably 0.5 to 1m.

8. Method as claimed in claim 1-7, wherein the labyrinth elements have a length of 0.1 to 2m, preferably 0.2 to 1.5m, more preferably 0.3 to 1m, and/or a diameter in the range of 0.1 to 1cm, preferably 0.2 to 0.5cm.

9. Method as claimed in claim 1- 8, wherein air supply means are connected to the core body for releasing air between the labyrinth means.

10. Method as claimed in claim 1- 9, wherein two or more petrifiable elements are used, which petrifiable elements are preferably spaced apart over a distance of more than 0.2m, such as 0.5 to 1m.

11. Method as claimed in claim 1-10, wherein the at least one labyrinth element is made of corrosive material such as iron, iron alloy and the like.

12. Riff forming installation for the method according to at least the claims 3 or 4, comprising at least one petrifiable element movably connected by connection means to anchor means, wherein the petrifiable element comprises a core body provided with outwardly projecting labyrinth elements.

13. Petrifiable element as defined in claims 1-12, at least comprising a core body provided with outwardly projecting labyrinth elements.

14. Strengthened ground surface or ground structure, such as a riff, water bottom, field, dune, dike, or road, obtainable by the method of claims 1-11.
